(19) Europäisches Patentamt
European Patent Office
Office européen des brevets

(11) Veröffentlichungsnummer: **0 257 380 B1**

(12) **EUROPÄISCHE PATENTSCHRIFT**

(45) Veröffentlichungstag der Patentschrift: **18.09.91**

(51) Int. Cl.$^5$: **C07F 9/34**

(21) Anmeldenummer: **87111288.4**

(22) Anmeldetag: **05.08.87**

# (54) Verfahren zur Herstellung von Thiophosphinsäurechloriden.

(30) Priorität: **09.08.86 DE 3627009**

(43) Veröffentlichungstag der Anmeldung:
**02.03.88 Patentblatt 88/09**

(45) Bekanntmachung des Hinweises auf die Patenterteilung:
**18.09.91 Patentblatt 91/38**

(84) Benannte Vertragsstaaten:
**BE CH DE FR GB IT LI NL**

(56) Entgegenhaltungen:
**EP-A- 0 074 582**
**DE-A- 2 129 583**
**DE-A- 2 623 845**

(73) Patentinhaber: **HOECHST AKTIENGESELLSCHAFT**
**Postfach 80 03 20**
**W-6230 Frankfurt am Main 80(DE)**

(72) Erfinder: **Kleiner, Hans-Jerg, Dr.**
**Altkönigstrasse 11a**
**W-6242 Kronberg/Taunus(DE)**

**EP 0 257 380 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von Thiophosphinsäurechloriden

Thiophosphinsäurechloride sind Verbindungen der allgemeinen Formel

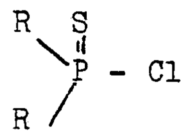

wobei R organische Reste bedeutet. Sie sind hauptsächlich Zwischenprodukte, z.B. zur Herstellung von Pflanzenschutzmitteln und von Peptiden.

Zur Herstellung der Thiophosphinsäurechloride sind verschiedene Verfahren bekannt; ein solches ist z.B. die Reaktion von Phosphinsäuren mit Thiophosphorylchlorid $PSCl_3$ (Zh. Obshch. Khim. Vol. 52, No. 1, S. 214 - 215, engl. Ausg. S. 195 - 196 (1982)). Für die Reaktion ist folgendes Formelschema angegeben:

$$R_2\ P(O)OH\ +\ PSCl_3 \rightarrow R_2\ P(S)Cl$$

Nach dem 1. Ausführungsbeispiel (Ia) wurden 0,011 Mol der Phosphinsäure mit R= $C_6H_5CH=CH-$ (= Distyrylphosphinsäure) mit 0,15 Mol - d.i. also ein erheblicher Überschuß -$PSCl_3$ 14 Stdn. unter Rückfluß erhitzt. Die Ausbeute an dem resultierenden Distyrylthiophosphinsäurechlorid soll 54 % betragen haben.

Die weiteren Ausführungsbeispiele sind nach der Darstellung in der Literaturstelle analog durchgeführt worden, mit folgenden Ausbeuten:

Beispiel Ib: Phosphinsäure mit R= $C_6H_5CCl=CH-$(= Di-β-chlorstyrylphosphinsäure) → Di-β-chlorstyrylthiophosphinsäurechlorid-Ausbeute 53 %

Beispiel Ic: Phosphinsäure mit R= $C_2H_5$-(= Diäthylphosphinsäure) → Diäthylthiophosphinsäurechlorid-Ausbeute 52 %; und

Beispiel Id: Phosphinsäure mit R= $C_6H_5$-(= Diphenylphosphinsäure) → Diphenylthiophosphinsäurechlorid-Ausbeute 33 %

Die Ausgangs-Phosphinsäuren sind nach verschiedenen Verfahren erhältlich. Beispielsweise kann man die Diäthylphosphinsäure aus dem entsprechenden Phosphinsäureanhydrid und Halogenwasserstoff nach dem Verfahren gemäß DE-OS 31 35 666 gewinnen. Für die in Zh. Obshch. Khim. a.a.O. beschriebene Methode sind die hohen Überschüsse an Thiophosphorylchlorid, die lange Reaktionsdauer und die nur mäßigen Ausbeuten nachteilig.

Eine weitere Herstellungsmethode für Thiophosphinsäurechloride ist die Umsetzung von Phosphinsäurechloriden mit Thiophosphorylchlorid bei Temperaturen von 140 - 250 °C und etwa Atmosphärendruck unter laufender Abdestillation des gebildeten Phosphoroxychlorids (DE-OS 26 23 845). Für diese Umsetzung läßt sich folgende Formelgleichung angeben:

$$R_2\ P(O)Cl\ +\ PSCl_3 \rightarrow R_2\ P(S)Cl\ +\ POCl_3$$

Das hier als Ausgangsprodukt eingesetzte Phosphinsäurechlorid kann aus den entsprechenden Phosphinsäureestern und anorganischen Säurehalogeniden der Formel $(YO)_n\ X_2$, worin Y= C oder S, X= Halogen und n für Y= C die Zahl 1 oder 2 und für Y= S die Zahl 1 bedeutet, über die Stufe des Phosphinsäureanhydrids gewonnen werden (DE-OS 21 29 583); z.B. mit $COCl_2$ als anorganischem Säurehalogenid kann man die Reaktion durch folgende Formelgleichungen wiedergeben:

$$2\ R_2P(O)OR'\ +\ COCl_2 \rightarrow R_2P(O)\text{-}O\text{-}(O)PR_2\ +\ CO_2\ +\ 2\ R'Cl$$

$$R_2P(O)\text{-}O\text{-}(O)PR_2\ +\ COCl_2 \rightarrow 2\ R_2P(O)Cl\ +\ CO_2$$

(R und R'= organ. Reste)

Um auf dem zuletzt skizzierten Weg zu Thiophosphinsäurechloriden zu gelangen, ist somit - wenn man von Phosphinsäureestern ausgeht - die Durchführung einiger Verfahrensstufen erforderlich.

In dem Bestreben, ein verbessertes Verfahren zur Herstellung von Thiophosphinsäurechloriden bereitzustellen, wurde nun gefunden, daß dieses Ziel durch Umsetzung von Phosphinsäureanhydriden mit Thiophosphorylchlorid in einer einzigen Verfahrensstufe erreicht werden kann.

Erfindungsgegenstand ist demzufolge ein Verfahren zur Herstellung von Thiophosphinsäurechloriden durch Umsetzung von Phosphinsäurederivaten mit Thiophosphorylchlorid; das Verfahren ist dadurch gekennzeichnet, daß man als Phosphinsäurederivate Phosphinsäureanhydride verwendet. Die Reaktion läßt sich durch folgende Gleichung beschreiben:

$$3\ R_2P(O)\text{-}O\text{-}(O)PR_2 + 6\ PSCl_3 \rightarrow 6\ R_2P(S)Cl + 4\ POCl_3 + P_2O_5$$

(R = organische Reste)

Ohne den Einsatz überschüssiger Mengen Ausgangssubstanz werden hier - ausgehend von Phosphinsäureanhydriden - in einer einzigen Verfahrensstufe in relativ kurzen Reaktionszeiten Produkte hoher Reinheit in guten Ausbeuten (mindestens 80 %) erhalten. Dies ist außerordentlich überaschend, da bei der Reaktion von Phosphinsäure mit Thiophosphorylchlorid (Zh. Obshch. Khim., a.a.O.) mit einem hohen Überschuß an Thiophosphorylchlorid und längeren Reaktionszeiten zur mäßige Ausbeuten (höchstens 53 %) erzielt werden.

Als Ausgangsverbindungen für das erfindungsgemäße Verfahren können im Prinzip alle möglichen Phosphinsäureanhydride verwendet werden. Vorzugsweise werden solche Phosphinsäureanhydride der vorstehend angegebenen allgemeinen Formel eingesetzt, in der die Reste R gleiche oder verschiedene Alkyl- und/oder Alkenylreste, also solche mit nur einer olefinischen Bindung - die sämtlich noch durch eine oder mehrere inerte Gruppen substituiert sein können - oder einkernige aromatische Kohlenwasserstoffreste bedeuten. Inerte Substituenten der Alkyl- und/oder Alkenylreste sind Substituenten, die unter den Reaktionsbedingungen nicht reagieren, also z.B. Halogen, Alkoxy-, Cyano- oder Phenylgruppen; bevorzugte Substituenten sind Chlor und Alkoxygruppen, wobei von den Alkoxygruppen solche mit 1 - 4 C-Atomen besonders bevorzugt sind. Als einkernige aromatische Kohlenwasserstoffe kommen vor allem unsubstituierte Phenylreste in Betracht, daneben aber auch solche, die durch höchstens zwei geradkettige oder verzweigte Alkylgruppen mit 1 bis 4 C-Atomen substituiert sind, die aber insgesamt nicht mehr als 10 C-Atome enthalten. Bevorzugt sind außer Phenylresten die Alkylreste mit insgesamt 1 - 20 und die Alkenylreste mit insgesamt 2 - 20 C-Atomen; besonders bevorzugt sind Alkylreste mit insgesamt 1 - 5 C-Atomen.

Beispielhafte Ausgangsverbindungen - und zwar sowohl nicht bevorzugte als auch bevorzugte - sind also:

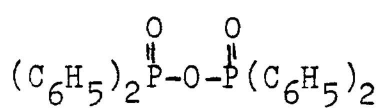

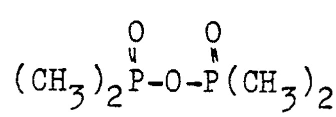

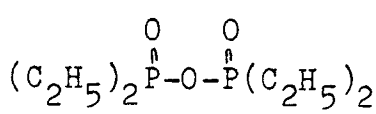

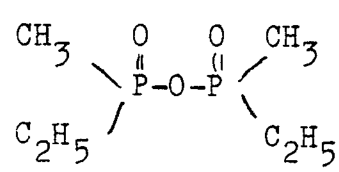

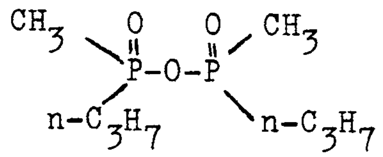

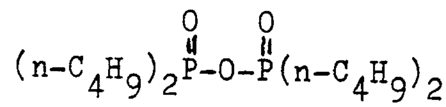

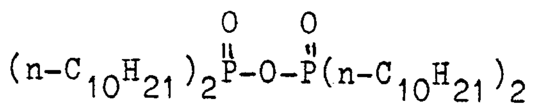

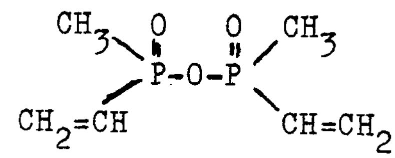

etc.

Die Herstellung der Ausgangsphosphinsäureanhydride erfolgt nach üblichen Verfahren, wie z.B. oben im Zusammenhang mit der DE-OS 21 29 583 beschrieben.

Das zweite Ausgangsprodukt $PSCl_3$ ist ein übliches Handelsprodukt; gegebenenfalls läßt es sich auch in situ aus $PCl_3$ und Schwefel erzeugen.

Gemäß der Reaktionsgleichung werden Phosphinsäureanhydride und Thiophosphorylchlorid in einem Verhältnis von 1 : 2 eingesetzt; der Einsatz der Ausgangsstoffe in diesem Molverhältnis (exakt oder wenigstens ungefähr) ist auch bevorzugt. Man kann die Umsetzung auch mit einem Überschuß an Thiophosphorylchlorid durchführen, was jedoch keinen Vorteil bietet.

Die Reaktion kann im Prinzip in einem weiten Temperaturbereich ablaufen; vorzugsweise wird sie bei Temperaturen zwischen etwa 80 und 250 °C, insbesondere zwischen etwa 100 und 200 °C und bei der Verwendung aliphatischer Phosphinsäureanhydride zwischen etwa 100 und 170 °C durchgeführt. Die Durchführung erfolgt ansonsten in an sich üblicher Weise. Die eine Ausgangskomponente - entweder Phosphinsäureanhydrid oder Thiophosphorylchlorid - wird normalerweise (bevorzugt unter Rühren) auf die Reaktionstemperatur erhitzt, und anschließend wird - vorzugsweise innerhalb von etwa 2 bis 5 Stunden die andere Komponente - also Thiophosphorylchlorid bzw. Phosphinsäureanhydrid - zugetropft. Das bei der Reaktion gebildete Phosphoroxychlorid wird zweckmäßig - bevorzugt über eine Kolonne - abdestilliert. Das anfallende Reaktionsgut wird vorzugsweise durch Destillation -gegebenenfalls unter vermindertem Druck - gereinigt. Die Erfindung wird nun durch die nachfolgenden Beispiele näher erläutert.

Beispiele

1. Methyl-äthyl-thiophosphinsäurechlorid.

511 g (3,02 Mol) Thiophosphorylchlorid wurden auf 110 °C unter Rühren erhitzt und dann 272 g (1,37 Mol) Methyl-äthyl-phosphinsäureanhydrid in 2 Stunden eingetropft; gleichzeitig wurde langsam die Temperatur auf 140 °C gesteigert. Über eine 80 cm-Silbermantel-Füllkörperkolonne destillierte Phosphoroxychlorid ab. Anschließend wurde 6 Stunden nachgerührt und dabei die Innentemperatur auf 170 °C gesteigert. Das anfallende Reaktionsgut wurde anschließend nach Kühlung ohne Verwendung einer Kolonne destilliert. Man erhielt 312 g 96,5 %iges Methyl-äthyl-thiophosphinsäurechlorid (Kp. 70 °C; 0,1333 kPa). Als Rückstand verblieben 135 g. Die Ausbeute beträgt 80 % d.Th., bezogen auf das eingesetzte Methyl-äthyl-phosphinsäureanhydrid.

2. Methyl-n-propyl-thiophosphinsäurechlorid.

56,6 g (0,25 Mol) Methyl-n-propyl-phosphinsäureanhydrid wurden allmählich unter Rühren und laufender Zugabe von Thiophosphorylchlorid, insgesamt 84,5 g (0,5 Mol), während 5 Stunden auf zuletzt 150 °C erhitzt. Phosphoroxychlorid destillierte ab. Der Rückstand wurde nach Kühlung bei 0,067 kPa destilliert bei einer Übergangstemperatur von 70 °C bis zu einer Innentemperatur von 135 °C. Man erhielt 65 g Methyl-n-propyl-thiophosphinsäurechlorid. Das entspricht einer Ausbeute von 83 % d.Th.

3. Diphenylthiophosphinsäurechlorid.

209 g (0,5 Mol) Diphenylphosphinsäureanhydrid wurden auf 180 - 190 °C erhitzt und dann in mehreren Stunden unter Rühren Thiophosphorylchlorid im Überschuß eingetropft; dabei destillierte über eine Kolonne

Phosphoroxychlorid zusammen mit nicht umgesetztem Thiophosphorylchlorid ab. Nach beendeter Umsetzung wurde das Reaktionsgut über einen Dünnschichtverdampfer unter vermindertem Druck destilliert. Anschließend wurde ohne Verwendung einer Kolonne destilliert. Man erhielt 200 g Diphenylthiophosphinsäurechlorid (Kp. 170°C; 0,053 kPa). Das entspricht einer Ausbeute von 79 % d. Th.

## Patentansprüche

1. Verfahren zur Herstellung von Thiophosphinsäurechloriden durch Umsetzung von Phosphinsäurederivaten mit Thiophosphorylchlorid, dadurch gekennzeichnet, daß man als Phosphinsäurederivate Phosphinsäureanhydride verwendet.

2. Verfahren nach Anspruch 1, dadurch gekennzeichnet, daß man als Phosphinsäureanhydride Verbindungen der Formel verwendet

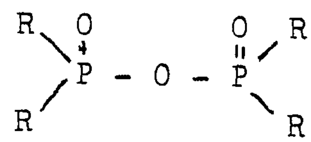

wobei die Reste R gleiche oder verschiedene Alkyl- und/oder Alkenylreste - die ihrerseits noch durch inerte Gruppen, vorzugsweise durch Chlor oder Alkoxygruppen, insbesondere mit 1 bis 4 C-Atomen, substituiert sein können - bedeuten.

3. Verfahren nach Anspruch 2, dadurch gekennzeichnet, daß die Alkyl- und/oder Alkenylreste jeweils insgesamt bis zu 20 C-Atomen haben, wobei Alkylreste mit insgesamt 1 - 5 C-Atomen bevorzugt sind.

4. Verfahren nach einem oder mehreren der Ansprüche 1 bis 3, dadurch gekennzeichnet, daß das Phosphinsäureanhydrid und Thiophosphorylchlorid in einem Molverhältnis von etwa 1 : 2 eingesetzt werden.

5. Verfahren nach einem oder mehreren der Ansprüche 1 bis 4, dadurch gekennzeichnet, daß man die Umsetzung bei Temperaturen von etwa 80 - 250°C, vorzugsweise von etwa 100 - 200°C und insbesondere von etwa 100 - 170°C, durchführt.

6. Verfahren nach einem oder mehreren der Ansprüche 1 bis 5, dadurch gekennzeichnet, daß man während der Reaktion gebildetes Phosphoroxychlorid laufend abdestilliert.

7. Verfahren nach einem oder mehreren der Ansprüche 1 oder 4 bis 6, dadurch gekennzeichnet, daß man als Phosphinsäureanhydride Verbindungen der in Anspruch 2 angegebenen Formel verwendet, in der wenigstens ein Rest R ein einkerniger aromatischer Kohlenwasserstoffrest ist, der bis zu zwei Alkylreste und höchstens 10 C-Atome enthält, vorzugsweise aber unsubstituiert ist.

## Claims

1. A process for the preparation of thiophosphinic chlorides by reacting phosphinic acid derivatives with thiophosphoryl chloride, which comprises using phosphinic anhydrides as the phosphinic acid derivatives.

2. The process as claimed in claim 1, wherein the phosphinic anhydrides used are compounds of the formula

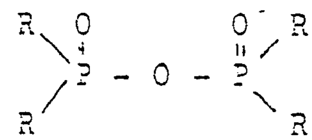

in which the radicals R are identical or different alkyl and/or alkenyl radicals - which may themselves be substituted by inert groups, preferably by chlorine or alkoxy groups, in particular having 1 to 4 carbon atoms.

3. The process as claimed in claim 2, wherein each of the alkyl and/or alkenyl radicals have a total of up to 20 carbon atoms, alkyl radicals having a total of 1 - 5 carbon atoms being preferred.

4. The process as claimed in one or more of claims 1 to 3, wherein the phosphinic anhydride and thiophosphoryl chloride are employed in a molar ratio of about 1:2.

5. The process as claimed in one or more of claims 1 to 4, wherein the reaction is carried out at temperatures of about 80 - 250° C, preferably about 100 - 200 ° C and in particular about 100 - 170° C.

6. The process as claimed in one or more of claims 1 to 5, wherein the phosphorus oxychloride formed during the reaction is continuously removed by distillation.

7. The process as claimed in one or more of claims 1 or 4 to 6, wherein the phosphinic anhydrides used are compounds of the formula given in claim 2, in which at least one radical R is a monocyclic aromatic hydrocarbon radical which contains up to two alkyl radicals and at most 10 carbon atoms, but is preferably unsubstituted.

## Revendications

1. Procédé pour préparer des chlorures d'acides thiophosphiniques par réaction de dérivés d'acides phosphiniques avec du chlorure de thiophosphoryle, procédé caractérisé en ce qu'on utilise, comme dérivés d'acides phosphiniques, des anhydrides d'acides phosphiniques.

2. Procédé selon la revendication 1 caractérisé en ce qu'on utilise, comme anhydrides d'acides phosphiniques, des composés répondant à la formule

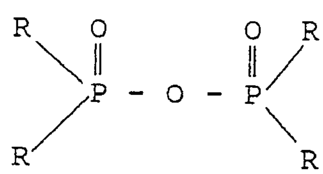

dans laquelle les symboles R représentent des radicaux alkyles et/ou alcényles identiques ou différents, qui peuvent porter des radicaux inertes, de préférence des atomes de chlore ou des radicaux alcoxy, plus particulièrement des radicaux alcoxy contenant de 1 à 4 atomes de carbone.

3. Procédé selon la revendication 2 caractérisé en ce que les radicaux alkyles et/ou alcényles contiennent chacun, au total, au plus 20 atomes de carbone, les radicaux alkyles contenant au total de 1 à 5 atomes de carbone étant ceux que l'on préfère.

4. Procédé selon l'une quelconque des revendications 1 à 3, caractérisé en ce que l'anhydride de l'acide phosphinique et le chlorure de thiophosphoryle sont mis en jeu dans un rapport molaire d'environ 1 : 2.

5. Procédé selon l'une quelconque des revendications 1 à 4, caractérisé en ce que la réaction est effectuée à des températures d'environ 80 à 250° C, de préférence d'environ 100 à 200° C ou, plus particulièrement, d'environ 100 à 170° C.

6. Procédé selon l'une quelconque des revendications 1 à 5, caractérisé en ce qu'on chasse continuellement par distillation l'oxychlorure de phosphore formé au cours de la réaction.

7. Procédé selon l'une quelconque des revendications 1 et 4 à 6, caractérisé en ce qu'on utilise, comme anhydrides d'acides phosphiniques, des composés répondant à la formule représentée à la revendication 2 dans laquelle au moins un des symboles R représente un radical hydrocarboné aromatique à un seul noyau qui porte au plus deux radicaux alkyles et contient au plus 10 atomes de carbone, mais qui est de préférence non substitué.